# EUROPEAN PATENT APPLICATION

(11) **EP 4 770 226 A1**
(43) Date of publication of application: **01.07.2026**
(21) Application number: 24855760.5
(22) Date of filing: 19.08.2024
(51) Int. Cl.: H04W 72/04, H04W 64/00, H04W 4/02

(54) **SIDELINK-POSITIONING REFERENCE SIGNAL TRANSMISSION METHOD, AND TERMINAL AND NETWORK-SIDE DEVICE**

(30) Priority: 24.08.2023 CN 202311078395
(71) Applicant: Vivo Mobile Communication Co., Ltd., Dongguan, Guangdong 523863 (CN)
(72) Inventor: ZHANG, Hongping, Dongguan, Guangdong 523863 (CN); PAN, Xiang, Dongguan, Guangdong 523863 (CN)
(74) Representative: Studio Torta S.p.A.
(86) International application number: PCT/CN2024/112960
(87) International publication number: WO 2025/040037

(57) **Abstract**

This application relates to the field of wireless communication technologies, and discloses a method for transmitting a sidelink positioning reference signal, a terminal, and a network side device. The method for transmitting a sidelink positioning reference signal in embodiments of this application includes: A terminal determines that an SL PRS needs to be sent. The terminal sends a target request to an access network device, where the target request is used to request allocation of a sidelink resource, and the sidelink resource is used to send the SL PRS. The terminal obtains a sidelink resource allocated to the terminal by the access network device. The terminal sends the SL PRS on the allocated sidelink resource.

## Description

### CROSS-REFERENCE TO RELATED APPLICATIONS

This application claims priority to Chinese Patent Application No. 202311078395.2 filed in China, August 24, 2023, which is incorporated herein by reference in its entirety.

### TECHNICAL FIELD

This application relates to the field of wireless communication technologies, and in particular, to a method for transmitting a sidelink positioning reference signal, a terminal, and a network side device.

### BACKGROUND

In the related technology, for a sidelink (SideLink, SL) transmission, only a scenario of to-be-transmitted sidelink data in a logical channel is discussed currently. If the sidelink transmission is related to a sidelink positioning reference signal (SideLink Positioning Reference Signal, SL PRS), that is, in a scenario related to SL PRS transmission, how to implement a related process of the SL PRS transmission needs to be resolved urgently.

### SUMMARY

Embodiments of this application provide a method for transmitting a sidelink positioning reference signal, a terminal, and a network side device, to provide a technical solution for implementing SL PRS transmission.

According to a first aspect, a method for transmitting a sidelink positioning reference signal is provided, including: A terminal determines that an SL PRS needs to be sent. The terminal sends a target request to an access network device, where the target request is used to request allocation of a sidelink resource, and the sidelink resource is used to send the SL PRS. The terminal obtains the sidelink resource allocated to the terminal by the access network device. The terminal sends the SL PRS on the allocated sidelink resource.

According to a second aspect, a method for allocating a sidelink resource is provided, including: An access network device receives a target request sent by a terminal, where the target request is used to request allocation of a sidelink resource, and the sidelink resource is used to send the SL PRS. The access network device allocates a sidelink resource used for sending the SL PRS to the terminal.

According to a third aspect, an apparatus for transmitting a sidelink positioning reference signal is provided, including: a determining module, configured to determine that an SL PRS needs to be sent; a first transmission module, configured to send a target request to an access network device, where the target request is used to request allocation of a sidelink resource, and the sidelink resource is used to send the SL PRS; and an obtaining module, configured to obtain the sidelink resource allocated to the terminal by the access network device. The first transmission module is further configured to send the SL PRS on the allocated sidelink resource.

According to a fourth aspect, an apparatus for allocating a sidelink resource is provided, including: a second transmission module, configured to receive a target request sent by a terminal, where the target request is used to request allocation of a sidelink resource, and the sidelink resource is used to send an SL PRS; and an allocation module, configured to allocate, to the terminal, the sidelink resource for sending the SL PRS.

According to a fifth aspect, a terminal is provided. The terminal includes a processor and a memory. The memory stores a program or instructions executable in the processor. The program or the instructions, when executed by the processor, implement the steps of the method in the first aspect.

According to a sixth aspect, a terminal is provided, including a processor and a communication interface. The communication interface is coupled to the processor. The processor is configured to run a program or instructions, to implement the steps of the method in the first aspect.

According to a seventh aspect, a network side device is provided. The network side device includes a processor and a memory. The memory stores a program or instructions executable in the processor. The program or the instructions, when executed by the processor, implement the steps of the method in the second aspect.

According to an eighth aspect, a network side device is provided, including a processor and a communication interface. The communication interface is coupled to the processor. The processor is configured to run a program or instructions to implement the steps of the method in the second aspect.

According to a ninth aspect, a readable storage medium is provided. The readable storage medium stores a program or instructions. The program or the instructions, when executed by a processor, implement the steps of the method in the first aspect, or implement the steps of the method in the second aspect.

According to a tenth aspect, a wireless communication system is provided, including a terminal and a network side device. The terminal may be configured to perform the steps of the method in the first aspect. The network side device may be configured to perform the steps of the method in the second aspect.

According to an eleventh aspect, a chip is provided. The chip includes a processor and a communication interface. The communication interface is coupled to the processor. The processor is configured to run a program or instructions, to implement the steps of the method in the first aspect, or implement the steps of the method in the second aspect.

According to a twelfth aspect, a computer program/program product is provided. The computer program/program product is stored in a storage medium. The computer program/program product is executed by at least one processor, to implement the steps of the method in the first aspect or the steps of the method in the second aspect.

In embodiments of this application, when the terminal determines that the SL PRS needs to be sent, the terminal may send, to the access network device, the target request for requesting for transmission of the sidelink resource of the SL PRS, and then send the SL PRS on the sidelink resource allocated by the access network device, so as to implement sending of the SL PRS.

### BRIEF DESCRIPTION OF THE DRAWINGS

FIG. 1 is a block diagram of a wireless communication system to which an embodiment of this application may be applied;
FIG. 2a is a schematic diagram of an SL positioning architecture according to an embodiment of this application;
FIG. 2b is a schematic diagram of another SL positioning architecture according to an embodiment of this application;
FIG. 2c is a schematic diagram of still another SL positioning architecture according to an embodiment of this application;
FIG. 3 is a schematic flowchart of a method for transmitting a sidelink positioning reference signal according to an embodiment of this application;
FIG. 4 is another schematic flowchart of a method for transmitting a sidelink positioning reference signal according to an embodiment of this application;
FIG. 5 is still another schematic flowchart of a method for transmitting a sidelink positioning reference signal according to an embodiment of this application;
FIG. 6 is still another schematic flowchart of a method for transmitting a sidelink positioning reference signal according to an embodiment of this application;
FIG. 7 is a schematic flowchart of a method for allocating a sidelink resource according to an embodiment of this application;
FIG. 8 is still another schematic flowchart of a method for transmitting a sidelink positioning reference signal according to an embodiment of this application;
FIG. 9 is still another schematic flowchart of a method for transmitting a sidelink positioning reference signal according to an embodiment of this application;
FIG. 10a is a schematic structural diagram of an SL-BSR MAC CE according to an embodiment of this application;
FIG. 10b is a schematic flowchart of a method for allocating a sidelink resource according to an embodiment of this application;
FIG. 11 is a schematic structural diagram of an apparatus for transmitting a sidelink positioning reference signal according to an embodiment of this application;
FIG. 12 is a schematic structural diagram of an apparatus for allocating a sidelink resource according to an embodiment of this application;
FIG. 13 is a schematic structural diagram of a communication device according to an embodiment of this application;
FIG. 14 is a schematic structural diagram of a hardware structure of a terminal according to an embodiment of this application; and
FIG. 15 is a schematic diagram of a hardware structure of a network side device according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used to distinguish between similar objects rather than describe a specific order or sequence. It should be understood that the terms used in this case may be transposed where appropriate, so that embodiments of this application may be implemented in a sequence other than those illustrated or described herein. In addition, objects defined by "first" and "second" are generally of the same class and do not limit a quantity of objects. For example, one first object may be arranged, or a plurality of objects may be arranged. In addition, "or" in this application indicates at least one of connected objects. For example, "A or B" covers three solutions. In other words, solution one: including A and excluding B; solution two: including B and excluding A; and solution three: including both A and B. A character "/" generally indicates an "or" relationship between associated objects.

A term "indication" in this application may be a direct indication (or an explicit indication) or an indirect indication (or an implicit indication). The direct instruction may be understood as that a sending party clearly informs a receiving party of specific information, an operation to be performed, or a request result in the sent instruction. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to a system other than the NR system, such as a 6^{th} generation (6^{th} Generation, 6G) communication system.

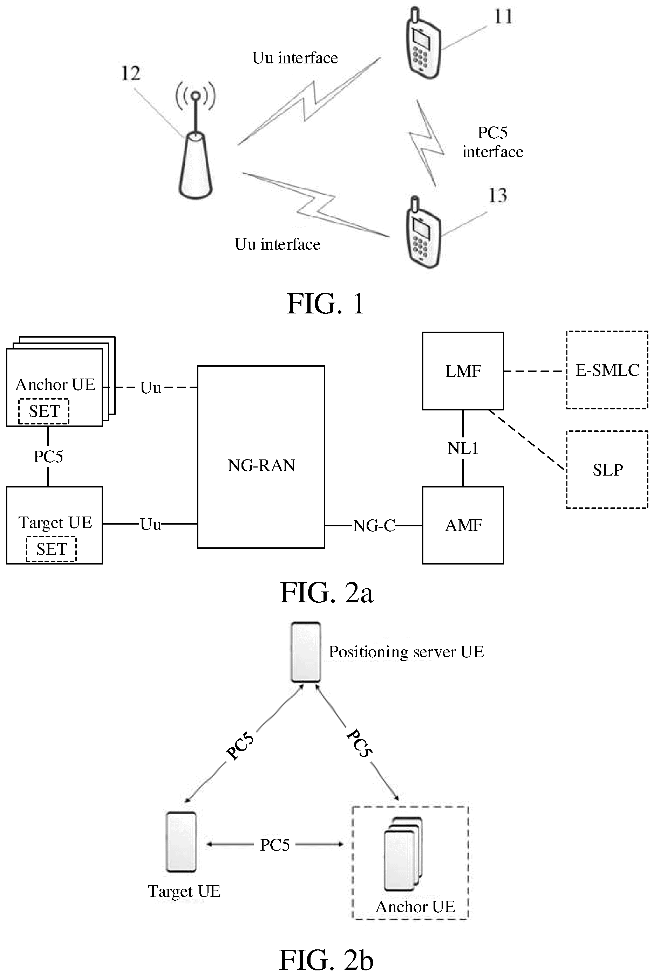

FIG. 1 is a block diagram of a wireless communication system to which embodiments of this application may be applied. The wireless communication system includes a relay terminal 11, a network side device 12, and a remote terminal 13. In this embodiment of this application, the remote terminal 13 communicates with the relay terminal 11 through a PC5 (a secondary link or a sidelink) interface. The relay terminal 11 communicates with the network side device 12 through a Uu interface.

The relay terminal 11 may alternatively be referred to as a relay (relay) terminal device or a relay user terminal (User Equipment, UE). The remote terminal 13 may alternatively be referred to as a remote terminal device or remote (remote) UE. The relay terminal 11 and the remote terminal 13 each may be a terminal-side device such as a mobile phone, a tablet personal computer (Tablet Personal Computer), a laptop computer (Laptop Computer), which is alternatively referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), a wearable device (Wearable Device) or an on-board device (VUE), or a pedestrian terminal (PUE). The wearable device includes a bracelet, a headphone, glasses, and the like. It should be noted that specific types of the relay terminal 11 and the remote terminal 13 are not limited in this embodiment of this application. The network side device 12 may be a base station or a core network. The base station may be referred to as a Node B, an evolving Node B, an access point, a base transceiver station (Base Transceiver Station, BTS), a radio base station, a radio transceiver, a basic service set (Basic Service Set, BSS), an extended service set (Extended Service Set, ESS), a Node B, an evolving B Node (eNB), a household node B, a household evolving node B, a WLAN access Point, a Wi-Fi node, a transmitting receiving point (Transmitting Receiving Point, TRP), or some other appropriate term in the stated field. It should be noted that, in this embodiment of this application, only a base station in an NR system is used as an example, and a specific type of the base station is not limited.

A 5G New Radio (New Radio, NR) system supports sidelink (sidelink, which is also translated as a secondary link, a side link, an edge link, or the like) transmission. In other words, data transmission is directly performed between terminals (User Equipment, UE) through a wireless interface. The sidelink transmission supports a plurality of transmission modes such as unicast, multicast, or groupcast. The sidelink transmission mainly includes the following physical channels:
a physical sidelink control channel (physical sidelink control channel, PSCCH);
a physical sidelink shared channel (physical sidelink shared channel, PSSCH);
a physical sidelink broadcast channel (physical sidelink broadcast channel, PSBCH); and
a physical sidelink feedback channel (physical sidelink feedback channel, PSFCH).

In a related technology, sidelink communication supports two resource allocation modes. In Mode (mode) 1, a base station allocates an SL resource to a terminal, and a UE performs, on a PC5 interface, sidelink transmission through a resource scheduled by the base station. In Mode 2, a terminal selects an SL resource from a resource pool, and resource pool information may be from a dedicated signaling message, a broadcast message, or preconfigured information of a base station.

If the UE operates in a range of a base station and has an RRC connection with the base station, an SL resource allocation mode may be determined to be model or mode2 by the base station. If the UE is within network coverage but does not have an RRC connection with the base station, the UE can only operate in the mode2. If the UE is out of the range of the base station, the UE can only operate in the mode2 and performs sidelink transmission based on the preconfigured information.

For the mode 1, the base station may configure, for the UE, a scheduling request configuration (scheduling request configuration) corresponding to two sidelink channel state information reporting (Sidelink CSI Reporting) and sidelink discontinuous reception command (Sidelink DRX Command) from a medium access control control element (Medium Access Control Control Element, MAC CE), for example, an sl-CSI-SchedulingRequestId-r16 information element. When the UE needs to send a Sidelink CSI Reporting MAC CE or a Sidelink DRX Command MAC CE to a peer UE, the UE may send an SR corresponding to the sl-CSI-SchedulingRequestId-r16 to the base station to request the base station to allocate (or schedule) a related SL resource.

In addition to the above, the base station may also configure a corresponding scheduling request configuration for an SL logical channel, that is, sl-SchedulingRequestId-r16. When an SL buffer status report (Buffer Status Report, BSR) triggered by arrival of SL data on the SL logical channel needs to be sent, the UE may send an SR of the sl-SchedulingRequestId-r16 corresponding to the SL logical channel to the base station to request the base station to allocate (or schedule) a related SL resource.

During SL transmission, in addition to positioning based on a reference signal of a Uu port (a wireless interface between the UE and the base station), a need for positioning based on a PC5 port (a wireless interface between the UE and the UE) in scenarios such as vehicle-to-everything (Vehicle-to-Everything, V2X) also exists. For example, when a vehicle is not within a coverage area of a mobile network, sidelink positioning may be required.

When the sidelink positioning (SL positioning) based on the PC5 port is performed, that is, positioning is performed by measuring a Sidelink PRS of the PC5 port, the following roles may be included.

1. Target UE (target UE): A target terminal of positioning, and the positioning requires obtaining an absolute location, a relative location, or a ranging (ranging) of the terminal.

2. Anchor UE: A UE that supports positioning of a target UE, for example, provides positioning related information by sending and/or receiving an SL PRS (sidelink positioning reference signal).

For the SL positioning, the following two architectures may be used.

Architecture 1: SL positioning based on a location management function (Location Management Function, LMF, which may also be referred to as a positioning server). That is, along with a positioning architecture based on a Uu interface, a positioning server is responsible for controlling execution of SL positioning. A difference is that the SL positioning relates to at least two UEs (one target UE, and one or more anchor UEs), and the UE measures an SL PRS sent by another UE to implement positioning. A sidelink positioning architecture based on the LMF is shown in FIG. 2a. The architecture 1 is only applicable to a scenario in which the target UE and/or the anchor UE are within the network coverage, and is not applicable to a scenario in which both the target UE and the anchor UE are out of the network coverage.

Architecture 2: SL positioning not based on an (irrelevant) positioning server. For this architecture, a communication network node may not be involved, and positioning is implemented through interaction between a plurality of UEs. The architecture may include the following two possible architectures.

A possible architecture 1: a positioning architecture based on a positioning service UE, as shown in FIG. 2b.

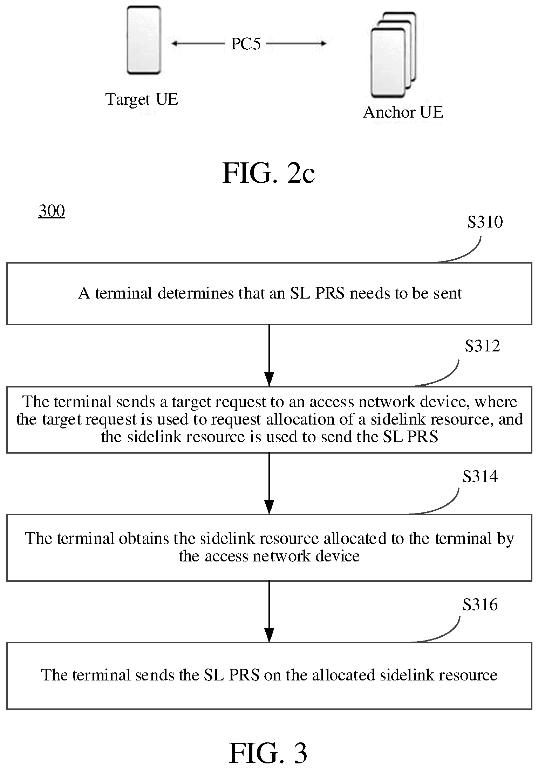

A possible architecture 2: a positioning architecture without a positioning service UE, as shown in FIG. 2c.

Regardless of any one of the foregoing architectures, a basic principle of the sidelink positioning is as follows. The target UE sends an SL PRS on the PC5 interface, and one or more anchor UEs perform positioning measurement on the SL PRS sent by the target UE, to obtain a positioning measurement result, or the one or more anchor UEs send the SL PRS on the PC5 interface, and the target UE performs positioning measurement on the SL PRS sent by the one or more anchor UEs, to obtain a positioning measurement result. A location of the target UE is calculated based on the positioning measurement result.

However, in the related technology, no technical solution on how to perform SL PRS transmission is provided. In view of the problem, an embodiment of this application provides a solution for transmitting a sidelink positioning reference signal.

The solution for transmitting a sidelink positioning reference signal provided in embodiments of this application is described below in detail through some embodiments and application scenarios thereof with reference to the accompanying drawings.

FIG. 3 is a schematic flowchart of a method for transmitting a sidelink positioning reference signal according to an embodiment of this application. The method 300 may be performed by a terminal, for example, the foregoing target terminal in FIG. 2a-FIG. 2c, or the anchor terminal in FIG. 2a-FIG. 2c. In other words, the method may be performed by software or hardware installed in the terminal. As shown in FIG. 3, the method may include the following steps.

S310: A terminal determines that an SL PRS needs to be sent.

For example, after a media access control (Medium Access Control, MAC) layer of the terminal receives an SL PRS transmission request from a sidelink positioning protocol layer or a physical layer of the terminal, the terminal determines that the SL PRS needs to be sent.

S312: The terminal sends a target request to an access network device, where the target request is used to request allocation of a sidelink resource, and the sidelink resource is used to send the SL PRS.

For example, in an implementation, when the terminal is configured with a sidelink resource allocation mode 1 (that is, the foregoing mode 1, which may also be referred to as a sidelink resource allocation scheme 1 (Scheme 1)) and does not send the sidelink resource of the SL PRS, the terminal may send the target request to the access network device.

That there is no sidelink resource used to send the SL PRS includes at least one of the following:

(1) There is no available sidelink resource used to send the SL PRS. For example, when the terminal needs to send the SL PRS, the terminal has no available sidelink resource or has an available sidelink resource, but a size of the available sidelink resource is insufficient, and cannot transmit the SL PRS.

(2) There is no sidelink resource satisfying a delay requirement for sending the SL PRS within a predetermined time period. For example, when the terminal needs to send the SL PRS, the terminal only has sufficient sidelink resources for sending the SL PRS after a period of time. However, the period of time is excessively long, and a delay requirement for sending the SL PRS is not satisfied.

S314: The terminal obtains the sidelink resource allocated to the terminal by the access network device.

After receiving a target request sent by the terminal, the access network device may learn that the terminal needs to send an SL PRS, but does not send the sidelink resource of the SL PRS. Therefore, the access network device may allocate the sidelink resource for sending the SL PRS for configuration.

S316: The terminal sends the SL PRS on the allocated sidelink resource.

After obtaining the sidelink resource allocated to the terminal by the access network device, the terminal may send the SL PRS on the sidelink resource. If the terminal is the target terminal in FIG. 2a to FIG. 2c, the terminal may broadcast or unicast the SL PRS on the sidelink resource. One or more anchor UEs may perform positioning measurement on the SL PRS sent by the terminal, to obtain a positioning measurement result of the terminal. Alternatively, if the terminal is the anchor terminal in FIG. 2a to FIG. 2c, the terminal may unicast or broadcast the SL PRS on the sidelink resources. The target terminal may perform positioning measurement on the SL PRS sent by the anchor terminal, to obtain the positioning measurement result, and then perform calculation based on the positioning measurement result to obtain positioning information.

According to the foregoing technical solution provided in this embodiment of this application, when the terminal determines that the SL PRS needs to be sent, the terminal may send, to the access network device, the target request for requesting for transmission of the sidelink resource of the SL PRS, and then send the SL PRS on the sidelink resource allocated by the access network device, so as to implement sending of the SL PRS, thereby implementing SL positioning.

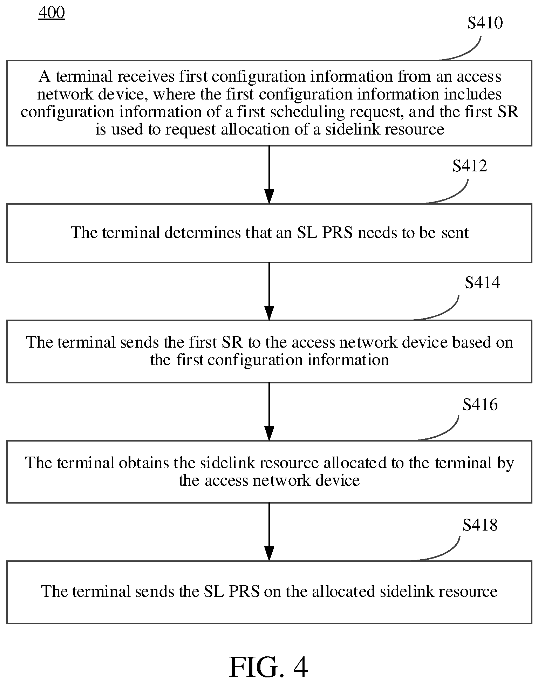

FIG. 4 is another schematic flowchart of a method for transmitting a sidelink positioning reference signal according to an embodiment of this application. The method 400 may be performed by a terminal, for example, the foregoing target terminal in FIG. 2a-FIG. 2c, or the anchor terminal in FIG. 2a-FIG. 2c. In other words, the method may be performed by software or hardware installed in the terminal. As shown in FIG. 4, the method may include the following steps.

S410: The terminal receives first configuration information from an access network device, where the first configuration information includes configuration information of a first scheduling request (Scheduling Request, SR), and the first SR is used to request allocation of a sidelink resource.

**In** the embodiment, the access network device may send the configuration information of the first SR to the terminal. The first SR is associated with an SL PRS transmission resource request. In other words, the first SR is used to request the access network device to allocate the sidelink resource for sending an SL PRS.

S412: The terminal determines that the SL PRS needs to be sent.

The step is the same as S310 described above. For details, reference may be made to the description of S310 described above.

S414: The terminal sends the first SR to the access network device based on the first configuration information.

**In** this embodiment, the target request includes the first SR. The terminal requests, through the first SR, the access network device to allocate a sidelink resource for sending the SL PRS.

When the terminal is configured with a sidelink resource allocation mode 1 and there is no sidelink resource used to send the SL PRS, the terminal may send the first SR to the access network device. For details, reference may be made to the foregoing related description.

In an implementation, the configuration information of the first SR may include a scheduling request identifier of the first SR, and the scheduling request identifier is associated with an air interface resource configuration for sending the first SR. For example, the scheduling request identifier may correspond to a scheduling request resource configuration related to sending of the first SR. The scheduling request resource configuration may include a corresponding physical uplink control channel (Physical Uplink Control Channel, PUCCH) resource, a period, an offset, and the like. The terminal may determine, based on the scheduling request identifier, the air interface resource configuration for sending the first SR, to send the first SR on the resource corresponding to the air interface resource configuration.

In an implementation, the configuration information of the first SR is configured at a granularity of a terminal (per UE). In other words, the access network device may configure only one SR for requesting the SL PRS for one terminal. The configuration information of the first SR may be applicable to all SL PRS resource requests of the terminal, including SL PRSs sent through unicast, multicast, and broadcast. The unicast may include all PC5-RRC connections of the terminal.

In another implementation, the configuration information of the first SR is configured at a granularity of an SL PRS resource pool (per SL PRS resource pool). In other words, the access network device may configure configuration information of different first SRs for different SL PRS resource pools. The SL PRS resource pool may be a dedicated resource pool or a shared resource pool for the SL PRS.

In a case that the configuration information of the first SR is configured at a granularity of the SL PRS resource pool, the terminal may send, when the first SR is sent to the access network device, the first SR corresponding to the target resource pool to the access network device based on the first configuration information. The target resource pool is a resource pool corresponding to a to-be-sent SL PRS.

In an implementation, the scheduling request identifier of the first SR is a dedicated identifier, and is dedicated to identifying a scheduling request that requests allocation of an SL PRS transmission resource. For example, a new information element is introduced to the first SR. The new information element is used to identify that the first SR is a scheduling request used to request allocation of the SL PRS transmission resource. For example, the new information element may be schedulingRequestID-SL PRS. Because the scheduling request identifier is the dedicated identifier, the access network device can learn, based on the dedicated identifier, that the UE requests the sidelink resource for the SL PRS, so that a sidelink resource having an appropriate size that is more suitable for SL PRS transmission may be allocated.

Alternatively, in another implementation, the scheduling request identifier of the first SR is a non-dedicated identifier, and the scheduling request identifier of the first SR is used to identify the scheduling request that requests the allocation of the SL PRS transmission resource, and is further used to identify a scheduling request for another purpose other than requesting the allocation of the SL PRS transmission resource. For example, the scheduling request identifier of the first SR may reuse a sidelink CSI scheduling request identifier (sl-CSI-SchedulingRequestId). In other words, the scheduling request identifier of the first SR is used to the scheduling request that requests allocation of an SL PRS transmission resource, and may further be used to identify SRs of a sidelink CSI reporting (Sidelink CSI Reporting) MAC CE and a sidelink DRX command (Sidelink DRX Command) MAC CE. Alternatively, the sl-CSI-SchedulingRequestId is applicable to the Sidelink CSI Reporting MAC CE, Sidelink DRX Command MAC CE, and SL PRS.

S416: The terminal obtains the sidelink resource allocated to the terminal by the access network device.

After receiving the first SR, the access network device may allocate, to the terminal, the sidelink resource for sending the SL PRS. Optionally, when the configuration information of the first SR is configured per SL PRS resource pool, the access network device may learn the resource pool corresponding to the SL PRS based on the first SR, and allocate, to the terminal, the sidelink resource for sending the SL PRS in the resource pool.

S418: The terminal sends the SL PRS on an allocated sidelink resource.

For example, the terminal may send the SL PRS on a PC5 in a manner of broadcast, multicast, or unicast based on the allocated sidelink resource.

According to the technical solution provided in this embodiment of this application, the terminal may send, based on first configuration information configured by the access network device, the first SR to the access network device when the SL PRS needs to be sent, to obtain the sidelink resource to which the SL PRS is sent, thereby implementing transmission of the SL PRS.

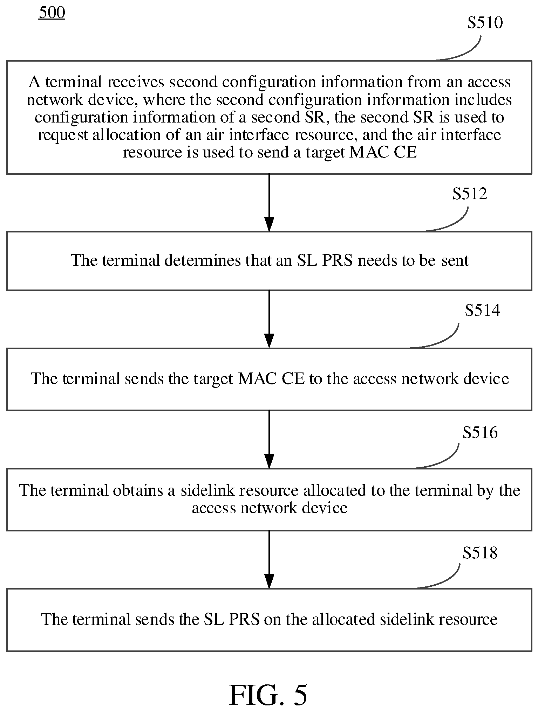

FIG. 5 is still another schematic flowchart of a method for transmitting a sidelink positioning reference signal according to an embodiment of this application. The method 500 may be performed by a terminal, for example, the foregoing target terminal in FIG. 2a-FIG. 2c, or the anchor terminal in FIG. 2a-FIG. 2c. In other words, the method may be performed by software or hardware installed in the terminal. As shown in FIG. 5, the method may include the following steps.

S510: The terminal receives second configuration information from an access network device, where the second configuration information includes configuration information of a second SR, the second SR is used to request allocation of an air interface resource, and the air interface resource is used to send a target MAC CE.

In this embodiment, the second SR is associated with a target MAC CE transmission request. In other words, the second SR is used to request the access network device to allocate the air interface resource to send the target MAC CE. The target MAC CE is used to request allocate a sidelink resource required to send an SL PRS.

Optionally, the configuration information of the second SR includes a scheduling request identifier of the second SR, and the scheduling request identifier is associated with an air interface resource configuration for sending the second SR. For example, the scheduling request identifier (ID) of the second SR corresponds to the sending of the scheduling request resource configuration related to the second SR. The scheduling request resource configuration may include a corresponding PUCCH resource, a period, an offset, and the like.

In an implementation, the scheduling request identifier of the second SR is a dedicated identifier, and is dedicated to identifying a scheduling request that requests the allocation and sending of the air interface resource of the target MAC CE. For example, the scheduling request identifier is a newly added informal element. Because the scheduling request identifier is the dedicated identifier, the access network device can learn, based on the dedicated identifier, that the UE requests the air interface resource for the target MAC CE, so as to allocate an air interface resource having an appropriate size that is more suitable for the target MAC CE.

In another implementation, the scheduling request identifier of the second SR is a non-dedicated identifier, and the scheduling request identifier of the second SR is used to identify a scheduling request that requests the allocation and the sending of the air interface resource of the target MAC CE, and is further used to identify a scheduling request for another purpose other than requesting the allocation and the sending of the air interface resource of the target MAC CE. For example, the scheduling request identifier of the second SR may reuse another scheduling request ID, for example, schedulingRequestID-PosMG-Request-r17 of an SR used for identifying a request for allocation of an air interface resource of a positioning measurement gap activation/deactivation request (Positioning Measurement Gap Activation/Deactivation Request) MAC CE, In other words, the Positioning Measurement Gap Activation/Deactivation Request MAC CE and a target MAC CE share one SR, or schedulingRequestID-PosMG-Request-r17 is applicable to the Positioning Measurement Gap Activation/Deactivation Request MAC CE and the target MAC CE.

S512: The terminal determines that an SL PRS needs to be sent.

The step is the same as S310 described above. For details, reference may be made to the related descriptions of S310.

S514: The terminal sends the target MAC CE to the access network device.

In this embodiment of this application, the target MAC CE is a MAC CE dedicated to requesting allocation of the sidelink resource for transmission of the SL PRS. In other words, the target MAC CE includes the MAC CE that is dedicated to requesting allocation of the sidelink resource for transmission of the SL PRS.

In this embodiment, the foregoing target request includes the target MAC CE.

For example, the terminal may send the target MAC CE to the access network device when the terminal is configured with a sidelink resource allocation mode 1 and there is no sidelink resource used to send the SL PRS.

In an implementation, if the terminal has a first air interface resource that may be available for sending the target MAC CE, the terminal may send the target MAC CE on the first air interface resource.

In another implementation, if the terminal does not have the first air interface resource that may be available for sending the target MAC CE, the terminal may send the second SR to the access network device, obtain the second air interface resource allocated by the access network device for sending the target MAC CE, and then send the target MAC CE to the access network device through the second air interface resource.

Optionally, the target MAC CE may include at least one of the following information (that is, the information may be any combination of the following information):
(1) resource bandwidth information of the SL PRS;
(2) resource pool information of the SL PRS;
(3) a sending period of the SL PRS;
(4) a quantity of times the SL PRS is sent; or
(5) destination address information of the SL PRS.

Based on the foregoing information, the access network device may obtain related information on the SL PRS that needs to be sent by the terminal, to allocate a suitable sidelink resource to the terminal.

S516: The terminal obtains the sidelink resource allocated to the terminal by the access network device.

After receiving the target MAC CE, the access network device may allocate, to the terminal, the sidelink resource for sending the SL PRS.

S518: The terminal sends the SL PRS on an allocated sidelink resource.

For example, the terminal may send the SL PRS on a PC5 in a manner of broadcast, multicast, or unicast based on the allocated sidelink resource.

According to the technical solution provided in this embodiment of this application, the terminal may send, based on second configuration information configured by the access network device, the target MAC CE to the access network device when needing to send the SL PRS, to obtain the sidelink resource to which the SL PRS is sent, thereby implementing transmission of the SL PRS.

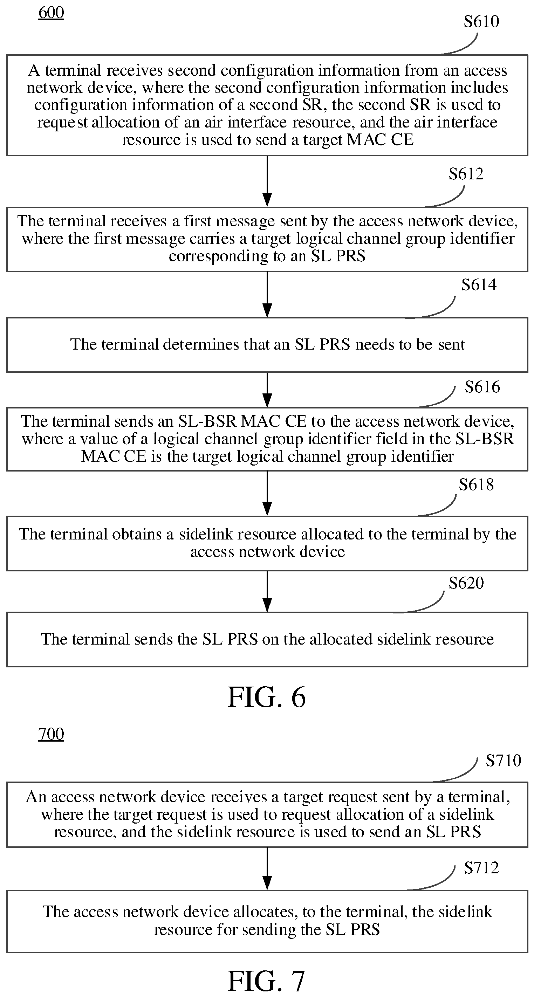

FIG. 6 is still another schematic flowchart of a method for transmitting a sidelink positioning reference signal according to an embodiment of this application. The method 600 may be performed by a terminal, for example, the foregoing target terminal in FIG. 2a-FIG. 2c, or the anchor terminal in FIG. 2a-FIG. 2c. In other words, the method may be performed by software or hardware installed in the terminal. A difference between the method and the method 500 shown in FIG. 5 is that the target MAC CE in the method 600 is a sidelink buffer status report (SL-BSR) MAC CE.

As shown in FIG. 6, the method may include the following steps.

S610: The terminal receives second configuration information from an access network device, where the second configuration information includes configuration information of a second SR, the second SR is used to request allocation of an air interface resource, and the air interface resource is used to send a target MAC CE.

The step is the same as S510 described above. For details, reference may be made to the foregoing related description.

S612: The terminal receives a first message sent by the access network device, where the first message carries a target logical channel group identifier corresponding to an SL PRS.

For example, the access network device may send a first radio resource control (Radio Resource Control, RRC) message to the terminal. The first RRC message may carry the target logical channel group (Logical Channel Group, LCG) identifier (ID) corresponding to the SL PRS. The target LCG ID is dedicated to identifying transmission of the SL PRS. The target LCG ID may be a virtual LCG ID. In other words, the target LCG ID may not be allocated to a logical channel for use.

Optionally, the first message may further carry a target transmission priority of the SL PRS. The target transmission priority is used to indicate a transmission priority of the SL PRS after the terminal receives an allocated sidelink resource.

Optionally, the access network device may send the first message based on a second message sent by the terminal. Therefore, in the optional implementation, before S612, the method may further include: The terminal sends the second message to the access network device, where the second message carries indication information for indicating an SL PRS transmission requirement. For example, the second message may be a second RRC message. The second RRC message includes indication information. The indication information is used to indicate an SL PRS transmission requirement. The second RRC message may be a sidelink UE information (Sidelink UE Information) message or a UE assistant information (UE Assistant Information) message, or may be a newly introduced message, which is not specifically limited in this embodiment.

S614: The terminal determines that the SL PRS needs to be sent.

The step is the same as S310 described above. For details, reference may be made to the related descriptions of S310.

In a specific implementation process, no necessary sequence exists between S614 and S612. For example, when the second configuration information is sent to the terminal, the access network device may send the first message to the terminal, and then the terminal determines that the SL PRS needs to be sent. Alternatively, if the terminal determines that the SL PRS needs to be sent after receiving the second configuration information, the terminal sends the second message to the access network device. After receiving the second message, the access network device sends the first message. Alternatively, after receiving the second configuration information, the terminal sends the second message to the access network device. After receiving the second message, the access network device sends the first message. Then, the terminal determines that the SL PRS needs to be sent.

S616: The terminal sends an SL-BSR MAC CE to the access network device, where a value of a logical channel group identifier field in the SL-BSR MAC CE is the target logical channel group identifier.

In this embodiment, the foregoing target MAC CE includes the SL-BSR MAC CE. An LCG ID in the SL-BSR MAC CE is a target LCG ID corresponding to the foregoing SL PRS.

In this embodiment, a value of a cache size field in the target MAC CE is an equivalent sidelink data size converted from the SL PRS.

Alternatively, the cache size field in the target MAC CE is used to indicate transmission information of the SL PRS. In other words, when the LCG ID is an LCG ID corresponding to the SL PRS, a buffer size corresponding to the LCG ID is no longer used to indicate a buffer size, but is used to indicate the L PRS transmission information.

Optionally, the foregoing SL PRS transmission information includes at least one of the following (that is, the information may be any combination of the following information):
(1) resource bandwidth information of the SL PRS;
(2) resource pool information of the SL PRS;
(3) a sending period of the SL PRS;
(4) a quantity of times the SL PRS is sent; or
(5) destination address information of the SL PRS.

Based on the foregoing transmission information of the SL PRS, the access network device may learn related information of the SL PRS to be transmitted by the terminal, so as to allocate a suitable sidelink resource for transmission of the SL PRS.

S618: The terminal obtains the sidelink resource allocated to the terminal by the access network device.

After the access network device receives the SL-BSR MAC CE, the access network device may allocate, to the terminal, the sidelink resource for sending the SL PRS because the LCG ID of the SL-BSR MAC CE is the target LCG ID corresponding to the SLPRS.

S620: The terminal sends the SL PRS on an allocated sidelink resource.

For example, the terminal may send the SL PRS on a PC5 in a manner of broadcast, multicast, or unicast based on the allocated sidelink resource.

Optionally, when the foregoing first message carries the target transmission priority corresponding to the SL PRS, the terminal may transmit the SL PRS on the sidelink resource based on the target transmission priority.

According to the technical solution provided in this embodiment of this application, the terminal may send, based on second configuration information configured by the access network device, the SL-BSR MAC CE to the access network device when the SL PRS needs to be sent, to obtain the sidelink resource to which the SL PRS is sent, thereby implementing transmission of the SL PRS.

FIG. 7 is a schematic flowchart of a method for allocating a sidelink resource according to an embodiment of this application. The method 700 may be performed by an access network device. In other words, the method may be performed by software or hardware installed on the access network device. As shown in FIG. 7, the method may include the following steps.

S710: The access network device receives a target request sent by a terminal, where the target request is used to request allocation of a sidelink resource, and the sidelink resource is used to send an SL PRS.

The terminal may send the target request to the access network device through any one of the foregoing methods in FIG. 3 to FIG. 6. For details, reference is made to the foregoing related descriptions. Details are not described here again.

S712: The access network device allocates, to the terminal, the sidelink resource for sending the SL PRS.

In this embodiment of this application, when the access network device receives the target request for requesting allocation of the sidelink resource for sending the SL PRS, the access network device allocates, to the terminal, the sidelink resource for sending an SL PRS, so that the terminal may send the SL PRS on the sidelink resource, thereby implementing SL positioning.

In an implementation, the target request includes a first scheduling request SR, and the first SR is used to request allocation of the sidelink resource. In an implementation, before the access network device receives a target request sent by the terminal, the method may further include: The access network device sends first configuration information to the terminal, where the first configuration information includes configuration information of the first SR.

In an implementation, the configuration information of the first SR may include a scheduling request identifier of the first SR, and the scheduling request identifier is associated with an air interface resource configuration for sending the first SR.

In an implementation, the configuration information of the first SR may be configured at a granularity of a terminal.

In another implementation, the configuration information of the first SR may be configured at a granularity of an SL PRS resource pool. That the access network device allocates a sidelink resource used for sending the SL PRS to the terminal may include: The access network device allocates, to the terminal from a target resource pool corresponding to the first SR, the sidelink resource for sending the SL PRS.

In an implementation, the scheduling request identifier of the first SR may be a dedicated identifier, and is dedicated to identifying a scheduling request that requests allocation of an SL PRS transmission resource.

In another implementation, the scheduling request identifier of the first SR is a non-dedicated identifier, and the scheduling request identifier of the first SR is used to identify the scheduling request that requests the allocation of the SL PRS transmission resource, and is further used to identify a scheduling request for another purpose other than requesting the allocation of the SL PRS transmission resource.

In an implementation, the target request includes a target MAC CE. The target MAC CE is used to request allocation of the sidelink resource.

In the foregoing implementation, optionally, before S710, the method may further include: The access network device sends second configuration information to the terminal, where the second configuration information includes configuration information of a second SR, the second SR is used to request allocation of an air interface resource, and the air interface resource is used to send the target MAC CE.

Optionally, the configuration information of the second SR includes a scheduling request identifier of the second SR, and the scheduling request identifier is associated with an air interface resource configuration for sending the second SR.

In an implementation, the scheduling request identifier of the second SR is a dedicated identifier, and is dedicated to identifying a scheduling request that requests the allocation and sending of the air interface resource of the target MAC CE.

In another implementation, the scheduling request identifier of the second SR is a non-dedicated identifier, and the scheduling request identifier of the second SR is used to identify a scheduling request that requests the allocation and the sending of the air interface resource of the target MAC CE, and is further used to identify a scheduling request for another purpose other than requesting the allocation and the sending of the air interface resource of the target MAC CE.

In an implementation, that the access network device receives a target request sent by the terminal may include:

The access network device receives the target MAC CE sent by the terminal on a first air interface resource available for sending the target MAC CE; or
the access network device receives the second SR sent by the terminal, allocates, to the terminal, a second air interface resource for sending the target MAC CE, and receives the target MAC CE sent by the terminal on the second air interface resource.

In an implementation, the target MAC CE includes a MAC CE dedicated to requesting the allocation of the sidelink resource.

In the foregoing implementation, the target MAC CE may include at least one of the following information (that is, the information may be any combination of the following information):
resource bandwidth information of the SL PRS;
resource pool information of the SL PRS;
a sending period of the SL PRS;
a quantity of times the SL PRS is sent; or
destination address information of the SL PRS.

In another implementation, the target MAC CE includes a sidelink buffer status report MAC CE.

In the foregoing implementation, optionally, that the access network device receives the target request sent by the terminal may include the following steps.

Step 1: The access network device sends a first message to the terminal, where the first message carries a target logical channel group identifier corresponding to the SL PRS.

Step 2: The access network device receives the target MAC CE sent by the terminal, where a value of a logical channel group identifier field in the target MAC CE is the target logical channel group identifier.

Optionally, the first message may further carry a target transmission priority corresponding to the SL PRS.

Optionally, before the access network device receives a target request sent by the terminal, the method may further include: The access network device receives a second message sent by the terminal, where the second message carries indication information for indicating an SL PRS transmission requirement.

Optionally, when the target MAC CE is a sidelink buffer status report MAC CE, a value of a cache size field in the target MAC CE is an equivalent sidelink data size converted from the SL PRS, or the cache size field in the target MAC CE is used to indicate transmission information of the SL PRS.

Optionally, the foregoing SL PRS transmission information includes at least one of the following (that is, the information may be any combination of the following information):
resource bandwidth information of the SL PRS;
resource pool information of the SL PRS;
a sending period of the SL PRS;
a quantity of times the SL PRS is sent; or
destination address information of the SL PRS.

According to the foregoing technical solution provided in this embodiment of this application, the access network device may allocate, to the terminal, the sidelink resource for sending the SL PRS, so that the terminal may transmit the SL PRS on the sidelink resource, to implement SL positioning.

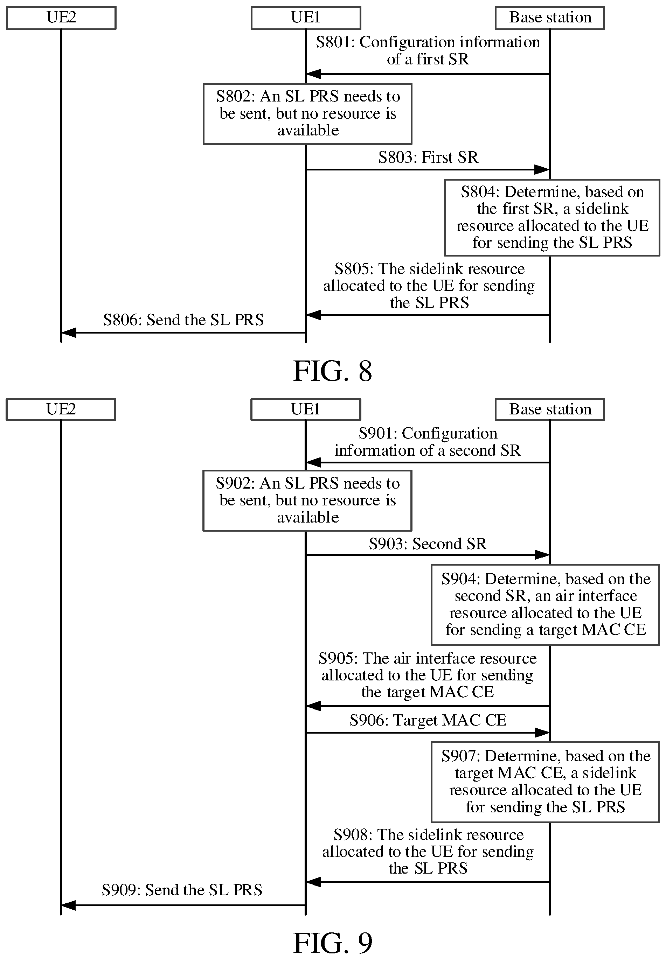

FIG. 8 is still another schematic flowchart of a method for transmitting an SL PRS according to an embodiment of this application. The method 800 may be performed by a terminal 1 (UE1) and a base station.

In an embodiment, the base station sends configuration information of a first SR to the UE1. The first SR is associated with an SL PRS transmission resource request. In other words, the first SR is used to request the base station to allocate the sidelink resource for sending an SL PRS. When the UE1 needs to send the SL PRS but has no available resource, the UE1 sends the first SR to the base station to request the base station to allocate the sidelink resource for sending the SL PRS. The base station allocates, to the UE1 based on the first SR, the sidelink resource for sending the SL PRS. The UE1 sends the SL PRS on a PC5 port through unicast, multicast, or broadcast based on the sidelink resource allocated by the base station. As shown in FIG. 8, the method mainly includes the following steps.

S801: A base station sends configuration information of a first SR to a UE1. The first SR is associated with an SL PRS transmission resource request. In other words, the first SR is used to request the base station to allocate the sidelink resource for sending the SL PRS.

Optionally, the configuration information of the first SR may include a scheduling request ID. The scheduling request ID corresponds to a related scheduling request resource configuration. The scheduling request resource configuration may include a corresponding PUCCH resource, a period, an offset, and the like.

Optionally, the configuration information of the first SR is configured per UE. In other words, only one SR used for requesting the SL PRS is configured for a UE. The configuration information of first SR is applicable to all SL PRS resource requests of the UE, and includes an SL PRS sent through unicast, multicast, and broadcast. The unicast includes all PC5-RRC connections of the UE.

Optionally, the configuration information of the first SR may be configured per an SL PRS resource pool. In other words, the base station may configure different SR configurations for different SL PRS resource pools. The SL PRS resource pool may be a dedicated resource pool or a shared resource pool for the SL PRS.

Optionally, the scheduling request ID of the first SR may be an SR dedicated to requesting for allocation of an SL PRS transmission resource. For example, a new information element schedulingRequestID-SL PRS is introduced, or an identifier of another SR may be reused, for example, sl-CSI-SchedulingRequestId. In other words, Sidelink CSI Reporting MAC CE, Sidelink DRX Command MAC CE, and SL PRS share one SR, or sl-CSI-SchedulingRequestId is applicable to the Sidelink CSI Reporting MAC CE, Sidelink DRX Command MAC CE, and SL PRS.

Optionally, when the base station configures the UE1 to use the sidelink resource allocation mode 1, the base station may send the configuration information of the first SR to the UE1.

S802: The terminal determines that the SL PRS needs to be sent and there is no sidelink resource used to send the SL PRS when the terminal is configured with a sidelink resource allocation mode 1.

This step is an optional step. Alternatively, when determining that the SL PRS needs to be sent, the terminal may directly perform S803.

Optionally, that there is no sidelink resource used to send the SL PRS may include: No available resource (including a resource that is not sufficiently sized) is used to send transmit the SL PRS.

Optionally, that there is no sidelink resource used to send the SL PRS may include: After sufficient resources are available for a period of time, the period of time does not satisfy a delay requirement for sending the SL PRS.

S803: The UE1 sends the first SR to the base station, to request the base station to allocate the sidelink resource for sending the SL PRS.

Optionally, the first SR is an SR corresponding to the resource pool of the SL PRS. In other words, the UE1 sends the first SR through the SR configuration corresponding to the resource pool corresponding to the SL PRS.

Optionally, after receiving an SL PRS transmission request from a sidelink positioning protocol (Sidelink Positioning Protocol, SLPP) layer or a physical layer, a MAC layer of the UE may determine that the SL PRS needs to be sent, and send the first SR to the base station.

The UE1 may concurrently participate in positioning of a plurality of sidelinks, and needs to send the SL PRS to a plurality of destinations (destination). Optionally, for each destination (that is, for a case in which a plurality of destinations send the SL PRS), each destination maintains a corresponding pending SR and a respective sr-ProhibitTimer.

S804: The base station receives the first SR, and the base station determines, based on the first SR, a sidelink resource allocated to the UE for sending the SL PRS.

Optionally, when the configuration information of the first SR is configured per SL PRS resource pool, the base station learns, based on the first SR, a resource pool corresponding to an SL PRS, and the base station allocates, to the UE, the sidelink resource for sending the SL PRS on the resource pool.

S805: The base station allocates, to the UE, the sidelink resource for sending the SL PRS.

S806: The UE1 sends the SL PRS on the allocated sidelink resource, and the SL PRS may be sent through broadcast, multicast, or unicast (for example, sent to UE2).

According to the method in this embodiment, the UE1 sends, based on the configuration information of the first SR configured by the base station, the first SR to the base station when needing to send the SL PRS, to obtain the sidelink resource to which the SL PRS is sent, thereby implementing transmission of the SL PRS.

FIG. 9 is still another schematic flowchart of a method for transmitting an SL PRS according to an embodiment of this application. The method 900 may be performed by a terminal 1 (UE1) and a base station.

In the method, a base station may send configuration information of a second SR to the UE1. The second SR is associated with a target MAC CE transmission request. In other words, the second SR is used to request the base station to allocate an air interface resource for sending a target MAC CE. The target MAC CE is used to request allocation of a sidelink resource required for the SL PRS transmission. When the UE1 needs to send an SL PRS, but has no available sidelink resource, if a Uu interface has an available resource for sending the target MAC CE, the target MAC CE is directly sent to the base station. If the Uu interface has no available resource for sending the target MAC CE, the UE1 sends a second SR to request the base station to allocate a resource to send the target MAC CE. After receiving scheduling, the UE1 sends the target MAC CE to the base station to obtain the sidelink resource for sending the SL PRS. As shown in FIG. 9, the method mainly includes the following steps.

S901: A base station sends configuration information of a second SR to the UE1. The second SR is associated with a target MAC CE transmission request. In other words, the second SR is used to request the base station to allocate an air interface resource for sending a target MAC CE. The target MAC CE is used to request allocation of a sidelink resource required for SL PRS transmission.

The configuration information of the second SR may include a scheduling request ID. The scheduling request ID corresponds to a related scheduling request resource configuration. The scheduling request resource configuration may include a corresponding PUCCH resource, a period, an offset, and the like.

Optionally, (the scheduling request ID of) the second SR may be an SR dedicated to requesting allocation and sending of an air interface resource of the target MAC CE. Alternatively, the scheduling request ID may be a non-dedicated scheduling request ID, for example, schedulingRequestID-PosMG-Request-r17 applicable for a Positioning Measurement Gap Activation/Deactivation Request MAC CE. In other words, the Positioning Measurement Gap Activation/Deactivation Request MAC CE and a target MAC CE share one SR, or schedulingRequestID-PosMG-Request-r17 is applicable to the Positioning Measurement Gap Activation/Deactivation Request MAC CE and the target MAC CE.

Optionally, when the base station configures the UE1 to use the sidelink resource allocation mode 1, the base station sends the configuration information of the second SR to the UE1.

S902: The UE1 determines that an SL PRS needs to be sent, but has no available sidelink resource, performs S906 if a Uu interface has an available resource for sending the target MAC CE, and performs S903 if the Uu interface has no available resource for sending the target MAC CE.

Optionally, an MAC layer of a UE determines that the SL PRS needs to be sent after receiving an SL PRS transmission request from an SLPP (Sidelink Positioning Protocol) layer or a physical layer.

S903: The UE1 sends the second SR to the base station, to request the base station to allocate the air interface resource for sending the target MAC CE.

S904: The base station determines, based on the second SR, the air interface resource allocated to the UE1 for sending the target MAC CE.

S905: The base station allocates, to the UE, the air interface resource for sending the target MAC CE.

S906: The UE1 sends the target MAC CE to the base station, where the target MAC CE is used to request the base station to allocate a sidelink resource required for SL PRS transmission.

S907: The base station determines, based on the target MAC CE, the sidelink resource allocated to the UE1 for sending the SL PRS.

S908: The base station allocates the sidelink resource to the UE1.

S909: The UE1 sends the SL PRS on the allocated sidelink resource, and the SL PRS may be sent through broadcast, multicast, or unicast (for example, sent to UE2).

In a specific application, in an implementation, the target MAC CE may be a MAC CE dedicated to requesting the allocation of the sidelink resource. In other words, the target MAC CE is a newly introduced MAC CE for requesting the sidelink resource for SL PRS transmission, and is, for example, referred to as a Sidelink PRS Transmission MAC CE. The target MAC CE may carry a combination of any of the following information:
(1) resource bandwidth information of the SL PRS, such as a quantity of an RB (Resource Block);
(2) resource pool information of the SL PRS;
(3) a sending period of the SL PRS;
(4) a quantity of times the SL PRS is sent; or
(5) destination information.

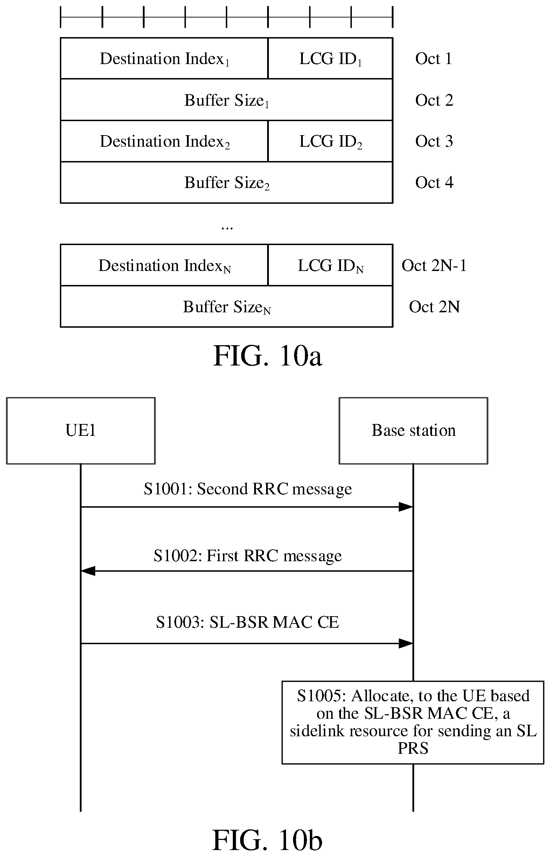

In another implementation, the target MAC CE may also be an SL-BRS MAC CE. The structure of the SL-BRS MAC CE is shown in FIG. 10a. The SL PRS is a reference signal of a physical layer and does not have a corresponding LCG. In addition, the SL PRS is not like the sidelink data has a buffer size. To adapt the SL-BSR, the base station may allocate an LCG ID to the SL PRS (that is, the SL PRS corresponds to a virtual LCG ID), and optionally, also allocate a transmission priority corresponding to the LCG ID. The transmission priority is used to determine a transmission priority of the SL PRS after the allocated sidelink resource is received.

Therefore, as shown in FIG. 10b, in the implementation, before the UE1 sends the target MAC CE to a base station, the following steps may be further included.

S1001: The UE1 sends a second RRC message to the base station, where the second RRC message includes indication information, and the indication information is used to indicate an SL PRS transmission requirement. The second RRC message may be a Sidelink UE Information message or a UE Assistant Information message, or may be a newly introduced message. The step is an optional step.

S 1002: The base station sends a first RRC message to the UE1, where the first RRC message includes an LCG ID corresponding to an SL PRS, and optionally, the second RRC message further includes a transmission priority of the SL PRS. Optionally, the base station sends the second RRC message based on the first RRC message.

The base station does not allocate the LCG ID corresponding to the SL PRS to a logical channel for use.

However, a step that UE1 sends a target MAC CE to the base station may include S1004.

S1003. The UE1 sends an SL-BSR MAC CE to the base station, where one LCG ID of the MAC CE is the LCG ID corresponding to the SL PRS. A Buffer size corresponding to the SL PRS in the SL-BSR may be an equivalent SL data size converted from the SL PRS. Alternatively, when the LCG ID is the LCG ID corresponding to the SL PRS, a buffer size corresponding to the LCG ID is no longer used to indicate the buffer size, but is used to indicate SL PRS transmission information. The SL PRS transmission information may be any combination of the following information:
(1) resource bandwidth information of the SL PRS, such as a quantity of an RB (Resource Block);
(2) resource pool information of the SL PRS;
(3) a sending period of the SL PRS;
(4) a quantity of times the SL PRS is sent; or
(5) destination information.

However, a step that the base station determines, based on the target MAC CE, allocation of a sidelink resource for sending an SL PRS to the UE1 may include S1004.

S1004: The base station receives the SL-BSR MAC CE, where if the LCG ID corresponds to the LCG ID of the SL PRS, the base station learns that the sidelink resource needs to be allocated to the SL PRS, and the base station uses a cache size field in the MAC CE as the equivalent SL data size of the SL PRS or as the foregoing SL PRS transmission information, and accordingly, allocates a sidelink resource of an appropriate size to the UE1.

According to the foregoing technical method provided in this embodiment of this application, the UE in the sidelink resource allocation mode 1 can effectively request the sidelink resource for SL PRS transmission from the base station in time, to perform SL PRS transmission.

The method for transmitting a sidelink positioning reference signal provided in embodiments of this application may be performed by an apparatus for transmitting a sidelink positioning reference signal. In embodiments of this application, the apparatus for transmitting a sidelink positioning reference signal provided in embodiments of this application is described by using an example in which the apparatus for transmitting a sidelink positioning reference signal performs the method for transmitting a sidelink positioning reference signal.

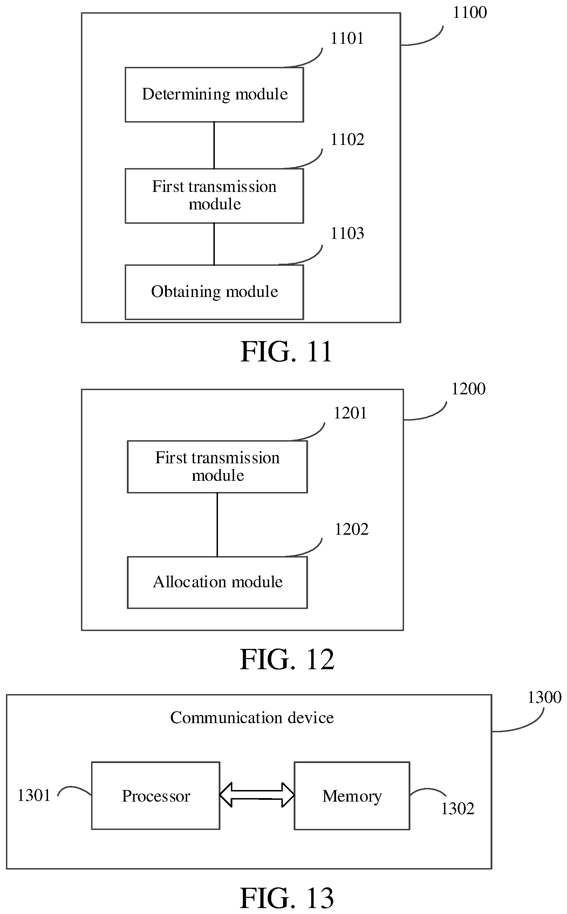

FIG. 11 is a schematic structural diagram of an apparatus for transmitting a sidelink positioning reference signal according to an embodiment of this application. As shown in FIG. 11, the apparatus 1100 mainly includes a determining module 1101, a first transmission module 1102, and an obtaining module 1103.

**In** an embodiment of this application, the determining module 1101 is configured to determine that an SL PRS needs to be sent. The first transmission module 1102 is configured to send a target request to an access network device, where the target request is used to request allocation of a sidelink resource, and the sidelink resource is used to send the SL PRS. The obtaining module 1103 is configured to obtain a sidelink resource allocated to the terminal by the access network device. The first transmission module 1102 is further configured to send the SL PRS on the allocated sidelink resource.

In an implementation, the sending the target request to the access network device includes:
sending the target request to the access network device when the terminal is configured with a sidelink resource allocation mode 1 and there is no sidelink resource used to send the SL PRS.

In an implementation, that there is no sidelink resource used to send the SL PRS includes at least one of the following:
there is no available sidelink resource used to send the SL PRS; or
there is no sidelink resource satisfying a delay requirement for sending the SL PRS within a predetermined time period.

In an implementation, the target request includes a first scheduling request SR, and the first SR is used to request allocation of the sidelink resource.

In an implementation, the first transmission module 1102 is further configured to receive first configuration information from the access network device, where the first configuration information includes configuration information of the first SR.

The sending a target request to an access network device includes: sending the first SR to the access network device based on the first configuration information.

In an implementation, the configuration information of the first SR includes a scheduling request identifier of the first SR, and the scheduling request identifier is associated with an air interface resource configuration for sending the first SR.

In an implementation, the configuration information of the first SR is configured at a granularity of a terminal.

In an implementation, the configuration information of the first SR is configured at a granularity of an SL PRS resource pool.

The sending the first SR to the access network device based on the first configuration information includes: sending a first SR corresponding to a target resource pool to the access network device based on the first configuration information, where the target resource pool corresponds to the SL PRS. In other words, the sidelink resource for sending the SL PRS is a resource in the target resource pool.

In an implementation, the scheduling request identifier of the first SR is a dedicated identifier, and is dedicated to identifying a scheduling request that requests allocation of an SL PRS transmission resource; or
the scheduling request identifier of the first SR is a non-dedicated identifier, and the scheduling request identifier of the first SR is used to identify the scheduling request that requests the allocation of the SL PRS transmission resource, and is further used to identify a scheduling request for another purpose other than requesting the allocation of the SL PRS transmission resource.

In an implementation, the target request includes a target MAC CE. The target MAC CE is used to request allocation of the sidelink resource.

In an implementation, the first transmission module 1102 is further configured to receive second configuration information from the access network device, where the second configuration information includes configuration information of a second SR, the second SR is used to request allocation of an air interface resource, and the air interface resource is used to send the target MAC CE.

In an implementation, the configuration information of the second SR includes a scheduling request identifier of the second SR, and the scheduling request identifier is associated with an air interface resource configuration for sending the second SR.

In an implementation, the scheduling request identifier of the second SR is a dedicated identifier, and is dedicated to identifying a scheduling request that requests the allocation and sending of the air interface resource of the target MAC CE; or
the scheduling request identifier of the second SR is a non-dedicated identifier, and the scheduling request identifier of the second SR is used to identify a scheduling request that requests the allocation and the sending of the air interface resource of the target MAC CE, and is further used to identify a scheduling request for another purpose other than requesting the allocation and the sending of the air interface resource of the target MAC CE.

In an implementation, the sending the target request to the access network device includes:
sending, when the terminal has a first air interface resource available for sending the target MAC CE, the target MAC CE to the access network device on the first air interface resource; or
sending the second SR to the access network device when the terminal does not have the first air interface resource available for sending the target MAC CE, and obtaining a second air interface resource allocated by the access network device for sending the target MAC CE, where the terminal sends the target MAC CE to the access network device through the second air interface resource.

In an implementation, the target MAC CE includes a MAC CE dedicated to requesting the allocation of the sidelink resource.

In an implementation, the target MAC CE includes at least one of the following information (that is, the information may be any combination of the following information):
resource bandwidth information of the SL PRS;
resource pool information of the SL PRS;
a sending period of the SL PRS;
a quantity of times the SL PRS is sent; or
destination address information of the SL PRS.

In an implementation, the target MAC CE includes a sidelink buffer status report MAC CE.

In an implementation, the first transmission module 1102 is further configured to receive a first message sent by the access network device, where the first message carries a target logical channel group identifier corresponding to the SL PRS. The sending a target request to an access network device includes: sending the target MAC CE to the access network device, where a value of a logical channel group identifier field in the target MAC CE is the target logical channel group identifier.

In an implementation, the first message further carries a target transmission priority corresponding to the SL PRS.

In an implementation, the first transmission module 1102 is further configured to send a second message to the access network device, where the second message carries indication information for indicating an SL PRS transmission requirement.

In an implementation, a value of a cache size field in the target MAC CE is an equivalent sidelink data size converted from the SL PRS, or the cache size field in the target MAC CE is used to indicate transmission information of the SL PRS.

In an implementation, the SL PRS transmission information includes at least one of the following (that is, the information may be any combination of the following information):
resource bandwidth information of the SL PRS;
resource pool information of the SL PRS;
a sending period of the SL PRS;
a quantity of times the SL PRS is sent; or
destination address information of the SL PRS.

In an implementation, the determining that a sidelink positioning reference signal SL PRS needs to be sent includes:
determining that the SL PRS needs to be sent after a media access control layer of the terminal receives an SL PRS transmission request from a sidelink positioning protocol layer or a physical layer of the terminal.

The apparatus for transmitting a sidelink positioning reference signal in embodiments of this application may be an electronic device, for example, an electronic device having an operating system, or may be a component in the electronic device, for example, an integrated circuit or a chip. The electronic device may be a terminal, or may be another device other than the terminal. For example, the terminal may include but is not limited to the foregoing listed types of the terminal 11. The another device may be a server, a network attached storage (Network Attached Storage, NAS), or the like, which is not specifically limited in embodiments of this application.

The apparatus for transmitting a sidelink positioning reference signal provided in embodiments of this application can implement each process implemented by the terminal in the method embodiment of FIG. 3 to FIG. 9, and achieve the same technical effect. To avoid repetition, details are not described here again.

FIG. 12 is a schematic structural diagram of an apparatus for allocating a sidelink resource according to an embodiment of this application. As shown in FIG. 12, the apparatus 1200 mainly includes a second transmission module 1201 and an allocation module 1202.

In this embodiment of this application, the second transmission module 1201 is configured to receive a target request sent by a terminal, where the target request is used to request allocation of a sidelink resource, and the sidelink resource is used to send an SL PRS. The allocation module 1202 is configured to allocate, to the terminal, the sidelink resource for sending the SL PRS.

In an implementation, the target request includes a first scheduling request SR, and the first SR is used to request allocation of the sidelink resource. The second transmission module 1201 is further configured to send first configuration information to the terminal, where the first configuration information includes configuration information of the first SR.

In an implementation, the configuration information of the first SR includes a scheduling request identifier of the first SR, and the scheduling request identifier is associated with an air interface resource configuration for sending the first SR.

In an implementation, the configuration information of the first SR is configured at a granularity of a terminal.

In an implementation, the configuration information of the first SR is configured at a granularity of an SL PRS resource pool.

The allocating, to the terminal, a sidelink resource used for sending the SL PRS includes: allocating, to the terminal from a target resource pool corresponding to the first SR, the sidelink resource for sending the SL PRS.

In an implementation, the scheduling request identifier of the first SR is a dedicated identifier, and is dedicated to identifying a scheduling request that requests allocation of an SL PRS transmission resource; or
the scheduling request identifier of the first SR is a non-dedicated identifier, and the scheduling request identifier of the first SR is used to identify the scheduling request that requests the allocation of the SL PRS transmission resource, and is further used to identify a scheduling request for another purpose other than requesting the allocation of the SL PRS transmission resource.

In an implementation, the target request includes a target media access control MAC control element CE, and the target MAC CE is configured to request allocation of the sidelink resource.

In an implementation, the second transmission module 1201 is further configured to send second configuration information to the terminal, where the second configuration information includes configuration information of a second SR, the second SR is used to request allocation of an air interface resource, and the air interface resource is used to send the target MAC CE.

In an implementation, the configuration information of the second SR includes a scheduling request identifier of the second SR, and the scheduling request identifier is associated with an air interface resource configuration for sending the second SR.

In an implementation, the scheduling request identifier of the second SR is a dedicated identifier, and is dedicated to identifying a scheduling request that requests the allocation and sending of the air interface resource of the target MAC CE; or
the scheduling request identifier of the second SR is a non-dedicated identifier, and the scheduling request identifier of the second SR is used to identify a scheduling request that requests the allocation and the sending of the air interface resource of the target MAC CE, and is further used to identify a scheduling request for another purpose other than requesting the allocation and the sending of the air interface resource of the target MAC CE.

In an implementation, the receiving a target request sent by a terminal includes:
receiving the target MAC CE sent by the terminal on a first air interface resource available for sending the target MAC CE; or
receiving the second SR sent by the terminal, allocating, to the terminal, a second air interface resource for sending the target MAC CE, and receiving the target MAC CE sent by the terminal on the second air interface resource.

In an implementation, the target MAC CE includes a MAC CE dedicated to requesting the allocation of the sidelink resource.

In an implementation, the target MAC CE includes at least one of the following information (that is, the information may be any combination of the following information):
resource bandwidth information of the SL PRS;
resource pool information of the SL PRS;
a sending period of the SL PRS;
a quantity of times the SL PRS is sent; or
destination address information of the SL PRS.

In an implementation, the target MAC CE includes a sidelink buffer status report MAC CE.

In an implementation, the receiving a target request sent by a terminal includes:
sending a first message to the terminal, where the first message carries a target logical channel group identifier corresponding to the SL PRS; and
receiving the target MAC CE sent by the terminal, where a value of a logical channel group identifier field in the target MAC CE is the target logical channel group identifier.

In an implementation, the first message further carries a target transmission priority corresponding to the SL PRS.

In an implementation, the second transmission module 1201 is further configured to receive a second message sent by the terminal, where the second message carries indication information for indicating an SL PRS transmission requirement.

In an implementation, a value of a cache size field in the target MAC CE is an equivalent sidelink data size converted from the SL PRS, or the cache size field in the target MAC CE is used to indicate transmission information of the SL PRS.

In an implementation, the SL PRS transmission information includes at least one of the following (that is, the information may be any combination of the following information):
resource bandwidth information of the SL PRS;
resource pool information of the SL PRS;
a sending period of the SL PRS;
a quantity of times the SL PRS is sent; or
destination address information of the SL PRS.

The apparatus for allocating a sidelink resource in embodiments of this application can implement each process implemented by the access network device or the base station in the method embodiments shown in FIG. 3 to FIG. 9, and achieve the same technical effects. To avoid repetition, details are not described here again.

As shown in FIG. 13, an embodiment of this application further provides a communication device 1300, including a processor 1301 and a memory 1302. The memory 1302 stores a program or instructions executable in the processor 1301. For example, when the communication device 1300 is a terminal, the program or the instructions, when executed by the processor 1301, implement the steps of embodiments of the foregoing method for transmitting an SL PRS, and can achieve the same technical effects. When the communication device 1300 is a network side device, the program or the instructions, when executed by the processor 1301, implement the steps of embodiments of the foregoing method for allocating a sidelink resource, and can achieve the same technical effect. To avoid repetition, details are not described here again.

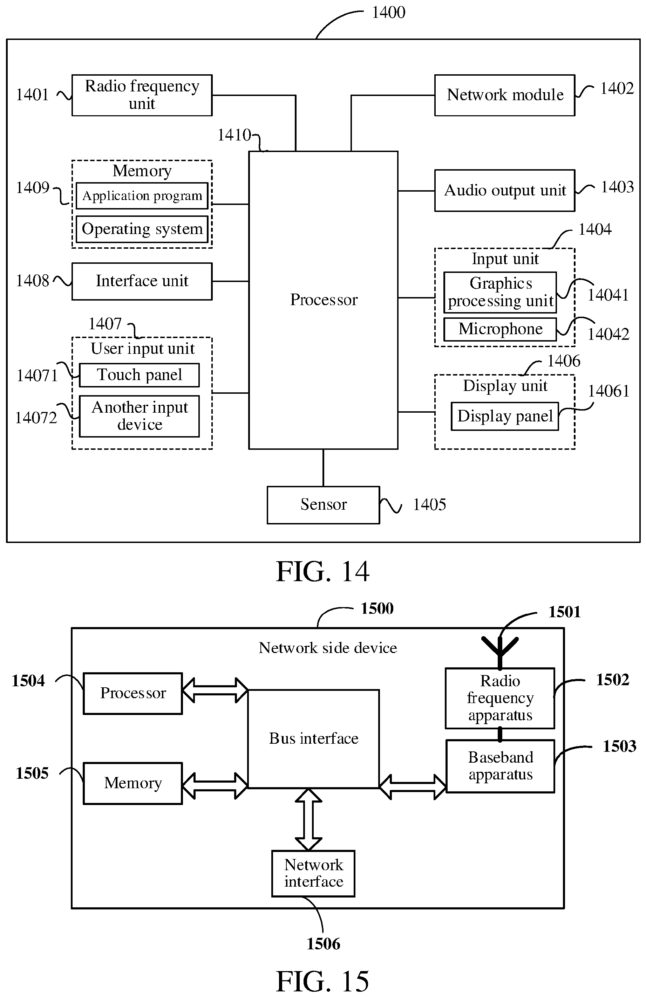

An embodiment of this application further provides a terminal, including a processor and a communication interface. The communication interface is coupled to the processor. The processor is configured to run a program or instructions, to implement the steps of the method embodiments shown in FIG. 3 to FIG. 6. The terminal embodiment corresponds to the foregoing method embodiment of the terminal side. The implementation processes and implementations of the foregoing method embodiment are all applicable to the terminal embodiment, and can achieve the same technical effect. Specifically, FIG. 14 is a schematic diagram of a hardware structure of a terminal for implementing an embodiment of this application.

The terminal 1400 includes, but is not limited to, at least some components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art may understand that the terminal 1400 may further include a power supply (for example, a battery) that supplies power to the components. The power supply may be logically connected to the processor 1410 through a power management system, to implement functions such as management of charging, discharging, and power consumption through the power management system. The terminal structure shown in FIG. 14 constitutes no limitation on the terminal, and the terminal may include more or fewer components than those shown in the figure, or some merged components, or different component arrangements. Details are not described herein again.

It should be noted that in this embodiment of this application, the input unit 1404 may include a graphics processing unit (Graphics Processing Unit, GPU) 14041 and a microphone 14042. The graphics processing unit 14041 processes image data of a static picture or a video obtained by an image capture apparatus (for example, a camera) in a video capture mode or an image capture mode. The display unit 1406 may include a display panel 14061. The display panel 14061 may be configured in a form such as a liquid crystal display or an organic light-emitting diode. The user input unit 1407 includes at least one of a touch panel 14071 or another input device 14072. The touch panel 14071 is also referred to as a touchscreen. The touch panel 14071 may include two parts: a touch detection apparatus and a touch controller. The another input device 14072 may include but is not limited to a physical keyboard, a function button (for example, a volume control button or a power button), a trackball, a mouse, and a joystick. Details are not described herein again.

In this embodiment of this application, the radio frequency unit 1401 receives downlink data from a network side device and may provide the downlink data to the processor 1410 for processing. In addition, the radio frequency unit 1401 may send uplink data to the network side device. Generally, the radio frequency unit 1401 includes but is not limited to an antenna, an amplifier, a transceiver, a coupler, a low noise amplifier, a duplexer, and the like.

The memory 1409 may be configured to store a software program or instructions and various data. The memory 1409 may include mainly a first storage area for storing a program or instructions and a second storage area for storing data. The first storage area may store an operating system, an application program or instructions required for at least one function (for example, a sound playback function and an image playback function), and the like. In addition, the memory 1409 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1409 in this embodiment of this application includes, but is not limited to, these memories and any other suitable types of memories.

The processor 1410 may include one or more processing units. Optionally, the processor 1410 integrates an application processor and a modem processor. The application processor mainly processes operations related to an operating system, a user interface, an application program, and the like. The modem processor mainly processes wireless communication signals, and is, for example, a baseband processor. It may be understood that the foregoing modem processor may alternatively not be integrated into the processor 1410.

The processor 1410 is configured to determine that an SL PRS needs to be sent.

The radio frequency unit 1401 is configured to send a target request to an access network device, where the target request is used to request allocation of a sidelink resource, and the sidelink resource is used to send the SL PRS.

The processor 1410 is further configured to obtain the sidelink resource allocated to the terminal by the access network device.

The radio frequency unit 1401 is further configured to send the SL PRS on the allocated sidelink resource.

It may be understood that the implementation process of each implementation in this embodiment may refer to the relevant description of the method embodiments 300-600, and the same or corresponding technical effects are achieved. To avoid repetition, details are not described here again.

An embodiment of this application further provides a network side device, including a processor and a communication interface. The communication interface is coupled to the processor. The processor is configured to run a program or instructions, to implement the steps of the method embodiment shown in FIG. 7. An embodiment of the network side device corresponds to the foregoing method embodiment of the network side device. Each implementation process and implementation of the foregoing method embodiment can be applied to this embodiment of the network side device, and can achieve the same technical effect.

Specifically, an embodiment of this application further provides a network side device. As shown in FIG. 15, the network side device 1500 includes an antenna 1501, a radio frequency apparatus 1502, a baseband apparatus 1503, a processor 1504, and a memory 1505. The antenna 1501 is connected to the radio frequency apparatus 1502. In an uplink direction, the radio frequency apparatus 1502 receives information through the antenna 1501, and sends the received information to the baseband apparatus 1503 for processing. In a downlink direction, the baseband apparatus 1503 processes to-be-sent information, and sends the processed to-be-sent information to the radio frequency apparatus 1502. The radio frequency apparatus 1502 processes the received information, and then sends the processed information through the antenna 1501.

The method performed by the network side device in the foregoing embodiment may be implemented by the baseband apparatus 1503. The baseband apparatus 1503 includes a baseband processor.

The baseband apparatus 1503 may include, for example, at least one baseband board. A plurality of chips are arranged on the baseband board, as shown in FIG. 15. One of the chips is, for example, a baseband processor, and is connected to the memory 1505 through a bus interface to call a program in the memory 1505, to perform the operations of the network device shown in the foregoing method embodiment.

The network side device may further include a network interface 1506. The interface is, for example, a common public radio interface (Common Public Radio Interface, CPRI).

Specifically, the network side device 1500 in this embodiment of this application further includes instructions or a program stored in the memory 1505 and executable on the processor 1504. The processor 1504 calls the instructions or the program in the memory 1505 to perform the method performed by each module shown in FIG. 11, and achieves the same technical effects. To avoid repetition, details are not described herein again.

An embodiment of this application further provides a readable storage medium. The readable storage medium stores a program or instructions. The program or instructions, when executed by a processor, implement each process of embodiments of the foregoing method for transmitting a sidelink positioning reference signal or each process of embodiments of the foregoing method for allocating a sidelink resource, and can achieve the same technical effect. To avoid repetition, details are not described herein again.

The processor may be a processor of the terminal in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement each process of embodiments of the foregoing method for transmitting a sidelink positioning reference signal or each process of embodiments of the foregoing method for allocating a sidelink resource embodiment, and can achieve the same technical effect. To avoid repetition, details are not described herein again.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement each process of embodiments of the foregoing method for transmitting a sidelink positioning reference signal or each of embodiments of the foregoing method for allocating a sidelink resource, and can achieve the same technical effect. To avoid repetition, details are not described herein again.

An embodiment of this application further provides a system for transmitting an SL PRS, including a terminal and a network side device. The terminal may be configured to perform the steps of the foregoing method for transmitting a sidelink positioning reference signal. The network side device may be configured to perform the steps of the foregoing method for allocating a sidelink resource.

It should be noted that in this specification, terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by a phrase "include one ..." does not exclude existence of an additional same element in the process, the method, the article, or the apparatus that includes the element. In addition, it should be noted that the scope of the method and the apparatus in the implementations of this application is not limited to function execution in the order shown or discussed, and may further include function execution in a substantially simultaneous manner or in a reverse order based on the involved functions. For example, the described method may be performed in an order different from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (for example, a ROM, a RAM, a magnetic disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection of this application.

## Claims

1. A method for transmitting a sidelink positioning reference signal, comprising:
determining, by a terminal, that a sidelink positioning reference signal SL PRS needs to be sent;
sending, by the terminal, a target request to an access network device, wherein the target request is used to request allocation of a sidelink resource, and the sidelink resource is used to send the SL PRS;
obtaining, by the terminal, the sidelink resource allocated to the terminal by the access network device; and
sending, by the terminal, the SL PRS on the allocated sidelink resource.

2. The method according to claim 1, wherein the sending, by the terminal, a target request to an access network device comprises:
sending, by the terminal, the target request to the access network device when the terminal is configured with a sidelink resource allocation mode 1 and there is no sidelink resource used to send the SL PRS.

3. The method according to claim 2, wherein that there is no sidelink resource used to send the SL PRS comprises at least one of the following:
there is no available sidelink resource used to send the SL PRS; or
there is no sidelink resource satisfying a delay requirement for sending the SL PRS within a predetermined time period.

4. The method according to any one of claims 1 to 3, wherein the target request comprises a first scheduling request SR, and the first SR is used to request allocation of the sidelink resource;
before the sending, by the terminal, a target request to an access network device, the method further comprises:
receiving, by the terminal, first configuration information from the access network device, wherein the first configuration information comprises configuration information of the first SR; and
the sending, by the terminal, a target request to an access network device comprises:
sending, by the terminal, the first SR to the access network device based on the first configuration information.

5. The method according to claim 4, wherein the configuration information of the first SR comprises a scheduling request identifier of the first SR, and the scheduling request identifier is associated with an air interface resource configuration for sending the first SR.

6. The method according to claim 4 or 5, wherein the configuration information of the first SR is configured at a granularity of a terminal.

7. The method according to claim 4 or 5, wherein the configuration information of the first SR is configured at a granularity of an SL PRS resource pool; and
the sending, by the terminal, the first SR to the access network device based on the first configuration information comprises: sending, by the terminal, a first SR corresponding to a target resource pool to the access network device based on the first configuration information, wherein the target resource pool corresponds to the SL PRS.

8. The method according to claim 5, wherein
the scheduling request identifier of the first SR is a dedicated identifier, and is dedicated to identifying a scheduling request that requests allocation of an SL PRS transmission resource; or
the scheduling request identifier of the first SR is a non-dedicated identifier, and the scheduling request identifier of the first SR is used to identify the scheduling request that requests the allocation of the SL PRS transmission resource, and is further used to identify a scheduling request for another purpose other than requesting the allocation of the SL PRS transmission resource.

9. The method according to any one of claims 1 to 3, wherein the target request comprises a target media access control MAC control element CE, and the target MAC CE is configured to request the allocation of the sidelink resource.

10. The method according to claim 9, wherein before the sending, by the terminal, a target request to an access network device, the method further comprises:
receiving, by the terminal, second configuration information from the access network device, wherein the second configuration information comprises configuration information of a second SR, the second SR is used to request allocation of an air interface resource, and the air interface resource is used to send the target MAC CE.

11. The method according to claim 10, wherein the configuration information of the second SR comprises a scheduling request identifier of the second SR, and the scheduling request identifier is associated with an air interface resource configuration for sending the second SR.

12. The method according to claim 11, wherein
the scheduling request identifier of the second SR is a dedicated identifier, and is dedicated to identifying a scheduling request that requests the allocation and sending of the air interface resource of the target MAC CE; or
the scheduling request identifier of the second SR is a non-dedicated identifier, and the scheduling request identifier of the second SR is used to identify a scheduling request that requests the allocation and the sending of the air interface resource of the target MAC CE, and is further used to identify a scheduling request for another purpose other than requesting the allocation and the sending of the air interface resource of the target MAC CE.

13. The method according to claim 10, wherein the sending, by the terminal, a target request to an access network device comprises:
sending, by the terminal when the terminal has a first air interface resource available for sending the target MAC CE, the target MAC CE to the access network device on the first air interface resource; or
sending, by the terminal, the second SR to the access network device when the terminal does not have the first air interface resource available for sending the target MAC CE, and obtaining a second air interface resource allocated by the access network device for sending the target MAC CE, wherein the terminal sends the target MAC CE to the access network device through the second air interface resource.

14. The method according to any one of claims 9 to 13, wherein the target MAC CE comprises a MAC CE dedicated to requesting the allocation of the sidelink resource.

15. The method according to claim 14, wherein the target MAC CE comprises at least one of the following information:
resource bandwidth information of the SL PRS;
resource pool information of the SL PRS;
a sending period of the SL PRS;
a quantity of times the SL PRS is sent; or
destination address information of the SL PRS.

16. The method according to any one of claims 9 to 13, wherein the target MAC CE comprises a sidelink buffer status report MAC CE.

17. The method according to claim 16, wherein
before the sending, by the terminal, a target request to an access network device, the method further comprises: receiving, by the terminal, a first message sent by the access network device, wherein the first message carries a target logical channel group identifier corresponding to the SL PRS; and
the sending, by the terminal, a target request to an access network device comprises: sending, by the terminal, the target MAC CE to the access network device, wherein a value of a logical channel group identifier field in the target MAC CE is the target logical channel group identifier.

18. The method according to claim 17, wherein
the first message further carries a target transmission priority corresponding to the SL PRS.

19. The method according to claim 17 or 18, wherein before the receiving, by the terminal, a first message sent by the access network device, the method further comprises:
sending, by the terminal, a second message to the access network device, wherein the second message carries indication information for indicating an SL PRS transmission requirement.

20. The method according to any one of claims 16 to 19, wherein a value of a cache size field in the target MAC CE is an equivalent sidelink data size converted from the SL PRS, or the cache size field in the target MAC CE is used to indicate transmission information of the SL PRS.

21. The method according to claim 20, wherein the transmission information of the SL PRS comprises at least one of the following:
resource bandwidth information of the SL PRS;
resource pool information of the SL PRS;
a sending period of the SL PRS;
a quantity of times the SL PRS is sent; or
destination address information of the SL PRS.

22. The method according to claim 1, where the determining, by a terminal, that a sidelink positioning reference signal SL PRS needs to be sent comprises:
determining, by the terminal, that the SL PRS needs to be sent after a media access control layer of the terminal receives an SL PRS transmission request from a sidelink positioning protocol layer or a physical layer of the terminal.

23. A method for allocating a sidelink resource, comprising:
receiving, by an access network device, a target request sent by a terminal, wherein the target request is used to request allocation of a sidelink resource, and the sidelink resource is used to send an SL PRS; and
allocating, to the terminal by the access network device, the sidelink resource for sending the SL PRS.

24. The method according to claim 23, wherein the target request comprises a first scheduling request SR, and the first SR is used to request allocation of the sidelink resource; and
before the receiving, by an access network device, a target request sent by a terminal, the method further comprises:
sending, by the access network device, first configuration information to the terminal, wherein the first configuration information comprises configuration information of the first SR.

25. The method according to claim 24, wherein the configuration information of the first SR comprises a scheduling request identifier of the first SR, and the scheduling request identifier is associated with an air interface resource configuration for sending the first SR.

26. The method according to claim 24 or 25, wherein the configuration information of the first SR is configured at a granularity of a terminal.

27. The method according to claim 24 or 25, wherein the configuration information of the first SR is configured at a granularity of an SL PRS resource pool; and
the allocating, to the terminal by the access network device, the sidelink resource for sending the SL PRS comprises: allocating, to the terminal by the access network device from a target resource pool corresponding to the first SR, the sidelink resource for sending the SL PRS.

28. The method according to claim 25, wherein
the scheduling request identifier of the first SR is a dedicated identifier, and is dedicated to identifying a scheduling request that requests allocation of an SL PRS transmission resource; or
the scheduling request identifier of the first SR is a non-dedicated identifier, and the scheduling request identifier of the first SR is used to identify the scheduling request that requests the allocation of the SL PRS transmission resource, and is further used to identify a scheduling request for another purpose other than requesting the allocation of the SL PRS transmission resource.

29. The method according to claim 23, wherein the target request comprises a target media access control MAC control element CE, and the target MAC CE is configured to request the allocation of the sidelink resource.

30. The method according to claim 29, wherein before the receiving, by an access network device, a target request sent by a terminal, the method further comprises:
sending, by the access network device, second configuration information to the terminal, wherein the second configuration information comprises configuration information of a second SR, the second SR is used to request allocation of an air interface resource, and the air interface resource is used to send the target MAC CE.

31. The method according to claim 30, wherein the configuration information of the second SR comprises a scheduling request identifier of the second SR, and the scheduling request identifier is associated with an air interface resource configuration for sending the second SR.

32. The method according to claim 31, wherein
the scheduling request identifier of the second SR is a dedicated identifier, and is dedicated to identifying a scheduling request that requests the allocation and sending of the air interface resource of the target MAC CE; or
the scheduling request identifier of the second SR is a non-dedicated identifier, and the scheduling request identifier of the second SR is used to identify a scheduling request that requests the allocation and the sending of the air interface resource of the target MAC CE, and is further used to identify a scheduling request for another purpose other than requesting the allocation and the sending of the air interface resource of the target MAC CE.

33. The method according to claim 30, wherein the receiving, by an access network device, a target request sent by a terminal comprises:
receiving, by the access network device, the target MAC CE sent by the terminal on a first air interface resource available for sending the target MAC CE; or
receiving, by the access network device, the second SR sent by the terminal, allocating, to the terminal, a second air interface resource for sending the target MAC CE, and receiving the target MAC CE sent by the terminal on the second air interface resource.

34. The method according to any one of claims 29 to 33, wherein the target MAC CE comprises a MAC CE dedicated to requesting the allocation of the sidelink resource.

35. The method according to claim 34, wherein the target MAC CE comprises at least one of the following information:
resource bandwidth information of the SL PRS;
resource pool information of the SL PRS;
a sending period of the SL PRS;
a quantity of times the SL PRS is sent; or
destination address information of the SL PRS.

36. The method according to any one of claims 29 to 33, wherein the target MAC CE comprises a sidelink buffer status report MAC CE.

37. The method according to claim 36, wherein the receiving, by an access network device, a target request sent by a terminal comprises:
sending, by the access network device, a first message to the terminal, wherein the first message carries a target logical channel group identifier corresponding to the SL PRS; and
receiving, by the access network device, the target MAC CE sent by the terminal, wherein a value of a logical channel group identifier field in the target MAC CE is the target logical channel group identifier.

38. The method according to claim 37, wherein
the first message further carries a target transmission priority corresponding to the SL PRS.

39. The method according to claim 37 or 38, wherein before the receiving, by an access network device, a target request sent by a terminal, the method further comprises:
receiving, by the access network device, a second message sent by the terminal, wherein the second message carries indication information for indicating an SL PRS transmission requirement.

40. The method according to any one of claims 36 to 39, wherein a value of a cache size field in the target MAC CE is an equivalent sidelink data size converted from the SL PRS, or the cache size field in the target MAC CE is used to indicate transmission information of the SL PRS.

41. The method according to claim 40, wherein the transmission information of the SL PRS comprises at least one of the following:
resource bandwidth information of the SL PRS;
resource pool information of the SL PRS;
a sending period of the SL PRS;
a quantity of times the SL PRS is sent; or
destination address information of the SL PRS.

42. An apparatus for transmitting a sidelink positioning reference signal, comprising:
a determining module, configured to determine that a sidelink positioning reference signal SL PRS needs to be sent;
a first transmission module, configured to send a target request to an access network device, wherein the target request is used to request allocation of a sidelink resource, and the sidelink resource is used to send the SL PRS; and
an obtaining module, configured to obtain the sidelink resource allocated to the terminal by the access network device, wherein
the first transmission module is further configured to send the SL PRS on the allocated sidelink resource.

43. An apparatus for allocating a sidelink resource, comprising:
a second transmission module, configured to receive a target request sent by a terminal, wherein the target request is used to request allocation of a sidelink resource, and the sidelink resource is used to send an SL PRS; and
an allocation module, configured to allocate, to the terminal, the sidelink resource for sending the SL PRS.

44. A terminal, comprising a processor and a memory, wherein the memory stores a program or instructions executable in the processor, and the program or the instructions, when executed by the processor, implement the steps of the method for transmitting a sidelink positioning reference signal according to any one of claims 1 to 22.

45. A network side device, comprising a processor and a memory, wherein the memory stores a program or instructions executable in the processor, and the program or the instructions, when executed by the processor, implement the steps of the method for allocating a sidelink resource according to any one of claims 23 to 41.

46. A readable storage medium, storing a program or instructions, wherein the program or the instructions, when executed by a processor, implement the steps of the method for transmitting a sidelink positioning reference signal according to any one of claims 1 to 22, or implement the steps of the method for allocating a sidelink resource according to any one of claims 23 to 41.
